(19) Europäisches Patentamt
European Patent Office
Office européen des brevets

(11) **EP 0 909 380 B1**

(12) **EUROPEAN PATENT SPECIFICATION**

(45) Date of publication and mention
of the grant of the patent:
**23.02.2005 Bulletin 2005/08**

(51) Int Cl.$^7$: **G01M 15/00**

(86) International application number:
**PCT/TR1997/000008**

(21) Application number: **97927586.4**

(22) Date of filing: **20.06.1997**

(87) International publication number:
**WO 1997/049977 (31.12.1997 Gazette 1997/57)**

(54) **MODEL-BASED FAULT DETECTION SYSTEM FOR ELECTRIC MOTORS**

MODELLGESTÜTZTES FEHLERDETEKTIONSSYSTEM FÜR ELEKTROMOTOREN

SYSTEME DE DETECTION DE PANNES A L'AIDE D'UN MODELE POUR MOTEURS
ELECTRIQUES

(84) Designated Contracting States:
**AT BE CH DE DK ES FI FR GB GR IE IT LI LU MC NL PT SE**

(30) Priority: **24.06.1996 TR 96527**

(43) Date of publication of application:
**21.04.1999 Bulletin 1999/16**

(73) Proprietors:
- **Arcelik A.S.**
  **81719 Istanbul (TR)**
- **Duyar, Ahmet**
  **Istanbul (TR)**

(72) Inventors:
- **DUYAR, Ahmet**
  **Istanbul (TR)**
- **DURAKBASA, Osman Tugrul**
  **81020 Istanbul (TR)**
- **ALBAS, Evren**
  **Sarikonak Apt. D. 11 81090 Istanbul (TR)**
- **SERAFETTINOGLU, A., Hakan**
  **81030 Ciftehavuzlar (TR)**

(74) Representative: **LOUIS- PÖHLAU- LOHRENTZ**
**Postfach 3055**
**90014 Nürnberg (DE)**

(56) References cited:
**EP-A- 0 632 283**    **EP-A- 0 659 996**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**BACKGROUND OF THE INVENTION**

The present invention relates to electric motors. More particularly, the present invention relates to a method and apparatus for condition monitoring and predictive maintenance of electric motors.

Electric motors are widely used in industrial equipment and processes where such motors are used to move goods along an assembly line from one work station to another or as a power source for power tools used by assemblers. Examples include air compressor that provide compressed air to power screw drivers, paint sprayers and other small hand-held appliances. Larger horsepower electrical motors maintain environmental control by cooling, heating and transporting air through the heating and cooling system in buildings and vehicles. In the home and office environment, electric motors are used in appliances ranging from computers to vacuum cleaners. As is generally known, such appliances constitute a major source of noise and vibration. Therefore, ever increasing demand from the market for quieter and vibration free motors can only be fulfilled by the design and production of fault free and quieter motors.

In the manufacturing environment, unexpected failure of the motor is both undesirable and costly. In the industrial setting, motor failure could have significant financial impact if an assembly line is shut down during the time it takes to repair or replace the motor. Further, in some manufacturing processes, such as in a semiconductor fabrication facility, failure of a critical motor could result in damage to the product if control over the environment is compromised.

Accordingly, there is a growing demand to improve the reliability of electric motors in general and, especially in industrial applications, detect impending faults so the motors can be repaired or replaced during routine maintenance rather than after failure has occurred. It is also desirable to improve reliability of electric motors through improved quality control monitoring during manufacture of the electric motors. It is further desirable to detect motor faults prior to catastrophic failure through performance monitoring during operation.

European Patent application no. 0632283, discloses a method for determining at least one operating parameter to determine the operating condition of a polyphase electric motor system comprises sensing the instantaneous current signal and the instantaneous voltage signal as a function of time for more than one electrical phase of the motor. The sensed current signals and the sensed voltage signals are both amplitude demodulated and phase demodulated. The resulting amplitude and phase demodulated signals are used to determine one or more of the following electrical parameters as a function of time: total real power, real power per phase, total reactive power, reactive power per phase, total apparent power, apparent power per phase, overall power factor, power factor per phase, electrical impedance per phase, and electrical balance. However, these calculations are tedious and decrease the overall performance of the fault detection system.

The prior art document EP0659996 explains an invention which relates to an apparatus for diagnosing and controlling an internal combustion engine or electric motor, in which apparatus signals such as sound, temperature, voltage and others from corresponding sensors are received and evaluated using a neural network by means of fuzzy logic and are used to control the engine or motor and for diagnosing and localising faults. One disadvantage of such a system is that, for measuring sound and temperature, voltage or current signals generated by the sensors have to be converted to these values according to a calibration curve. This procedure further complicates and introduces inevitable errors into the fault detection method.

Recently, fault detection and diagnosis methods have been developed that compare the output signals of complex systems with the output signal obtained from a mathematical model of the fault free system. The comparison of these signals is quantified in terms of a "residual" which is the difference between the two signals. Analysis of the residuals is carried out to determine the type of the fault. This analysis includes statistical methods to compare the residuals with a database of residuals for systems with known faults.

Until recently it has been difficult to obtain accurate, real-time models for multivariable systems, that is, systems with more than one inputs and/or one outputs. If the model of the system is not accurate, the residuals will contain modeling errors that are very difficult to separate from the effect of actual faults.

Another shortcoming of such FDD methods relates to the difficulty in generating a data base for statistical testing of residuals to classify faults. Developing such a database requires a priori information about all possible faults and the effect each such fault has on the residuals.

Accordingly, a period of time is required to monitor defective and normal equipment and to develop a data base which contains fault signatures for fault classification purposes. This process is both costly and time consuming. Also, the data base must also meet the specific requirements of a particular FDD scheme.

Since, mechanical faults are the result of vibration, detection and analysis of vibration is a common element of many prior art detection schemes. Such techniques require development of a library showing previously experienced motor vibration patterns which are correlated with the detected fault.

A common disadvantage of mechanical fault detection is that the scheme requires a-priori information about the fault signature in order to correlate the actual fault with the detected signature. Such correlation requires development of an extensive database and a laborious analysis and a level of expertise about the motor.

Another drawback of mechanical fault detection arises from the difficulty associated with reproducing the measurements. For example, vibration measurements using an accelerometer are highly dependent on mounting method and positioning of the sensor to ensure repeatable detection of the signature. Even with proper sensor mounting and positioning, signature detection may be corrupted by background vibration and variation in operating conditions such as running speed, input voltage and motor loading.

It will be appreciated that the likelihood of erroneous indication of failure in a system relying on mechanical fault detection is high. As an example, the assessment of the condition of the motor's bearings involves analyzing the mechanical vibration of the motor and separating out the specific frequencies related solely to bearing flaws (and/or any sum and difference frequencies and related harmonics). Unfortunately, the presence of, and possible coincidence with, other vibrations in the vibration spectrum often interfere with detection of the desired signal. Expensive and sophisticated means are necessary to gain the desired information and the success of such a system in detecting or predicting a fault is less than
desirable.

Accordingly, it is desirable to eliminate the complications caused by modeling errors and both false indications and missed indication of motor
faults. It is also desirable to avoid having to develop an extensive database and laboriously developed expertise in analysis of the cause of faults in electric motors. It is further desirable to eliminate the need for expensive and sophisticated means for obtaining and processing information that may indicate a fault exists.

## SUMMARY OF THE INVENTION

The present invention relates to a model based fault detection system and method for monitoring and predicting maintenance requirements of electric motors and more particularly fractional horsepower electric motors. Using the system, it is possible to obtain information for early diagnosis of impending mechanical failure of the electric motor in the operational environment under unknown loading conditions. Since the method and system of the present invention is software based and utilizes data obtained from non-intrusive measurements, implementation costs are significantly less than prior art maintenance methods.

The system comprises computer means coupled to voltage, current and speed sensors by a multifunction data acquisition means. The sensors provide continuous real-time information of the input voltage and current and of the output voltage signal developed by the motor's tachometer. The computer means uses such information in continuously running a fault detection and diagnostic algorithm in conjunction with a diagnostic observer.

The system and method utilize a multivariable experimental modeling algorithm to obtain a model of the electric motor by determining the structure, that is the order of the differential equations mathematically describing the motor, and the motor's invariants, that is, parameters such as inductance, motor resistance, moment of inertia, non-physical parameters such as A, B and C matrices of state equations describing the motor and other selected parameters. In the preferred embodiment, the model of the electric motor is developed when the motor is known to be running free of faults, usually after the motor is initially installed. Later, during operation, the model output voltage signal is calculated based on the actual input voltage and current applied to the motor and continuously compared to the measured output voltage signal of the motor. The algorithm quantifies the comparison in terms of a residual which is generated by subtracting the respective signals.

The diagnostic observer analyzes the residual and determines if the motor is fault free or operating in a manner other than fault free. Under fault free operation, the residual is ideally equal to zero although in operation a selected tolerance threshold may be selected to compensate for modeling errors and noise or other perturbations that may result in a non-zero residual.

When a motor component degrades such that the motor is operating outside its intended operating range or when a fault actually occurs, the residual will have a non-zero value that exceeds the tolerance threshold. When the computer means detects a non-zero residual, an impending fault is likely and a warning is given so that appropriate measures can be taken to minimize the effect that would otherwise be caused by a non-functional motor. Upon detection of the impending fault, the diagnostic observer evaluates the measured variables of the motor, determines the deviation from the reference value and develops a diagnosis of the likely failed or failing component.

In another embodiment of the present invention, a system for detecting and diagnosing mechanical faults of fractional horsepower electric motors is disclosed. Rather than developing an extensive database to correlate faults with the measured signals, the present embodiment incorporates a mathematical model of a fault free motor and measures operating parameters of the motor under test that are insensitive to environmental, operational and mounting distortion.

This embodiment is particularly useful in the manufacture of fractional horsepower electric motors and especially in the performance of quality control testing. After manufacture of a plurality of motors, a multivariable system identification algorithm is used to develop a base model using the entire available population of motors. It should be understood that the population may contain a number of faulty motors so it may be necessary to refine the model by selecting a tolerance threshold and retesting each motor against model. Those motors that fall outside of the threshold are removed from the population and the remaining motors are used to develop a revised base model. The revised base model is stored in a computer means for quality control testing of all subsequently manufactured motors.

If during quality control testing, the parameters, such as the inductance, motor resistance, friction coefficient or the moment of inertia, of a motor fall outside the threshold tolerance established in the base motor model, the motor under test is classified as having a fault. By comparing the parameters of the motor under test with the base motor model with different tolerance limits, it is possible to further classify the motor fault and display diagnostic information.

## BRIEF DESCRIPTION OF THE DRAWINGS

Figure 1 is a schematic representation of an electric motor useful in practicing a preferred embodiment of the present invention.

Figure 2 is a top view of typical motor enclosure.

Figures 3 and 4 show typical input and output waveforms for practicing one embodiment of the present invention.

Figure 5 is a schematic representation of system level configuration of a preferred embodiment of the present invention.

Figure 6 shows a block diagram of a fault detection and diagnosis system according to an embodiment of the present invention.

Figures 7A-7B and 8A and 8B show flow diagrams of the operation of the fault detection and diagnosis system of the present invention according to embodiments of the present invention.

## DETAILED DESCRIPTION OF THE INVENTION

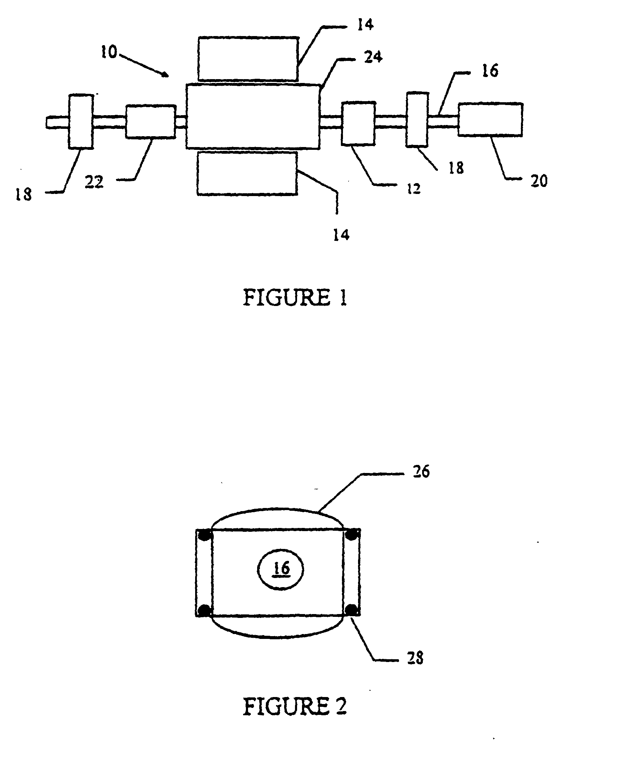

Referring to the drawings more particularly by reference numbers, Fig. 1 shows a system comprising an electrical motor 10 such as a fractional horsepower electric motor. For purposes of illustration, motor 10 comprises rotor windings 12, stator 14 and shaft 16 supported near either end by bearings 18. Pulley 20 couples shaft 16 to the load (not shown). Collector 22 conducts current into or out of the rotor 12 and armature 24 which, in conjunction with the stator, creates the magnetic field resulting in the motion of the motor. One skilled in the art will appreciate that motor 10 may have a rotor with neither commutator nor windings. Motor 10 is mounted in a case 26 that seals out dust, moisture and other foreign matter. Figure 2 is a top view of a motor enclosure and more particularly a case 26 where the base of the case is fastened to the cap by means of screws and nuts 28 in a manner well known in the art.

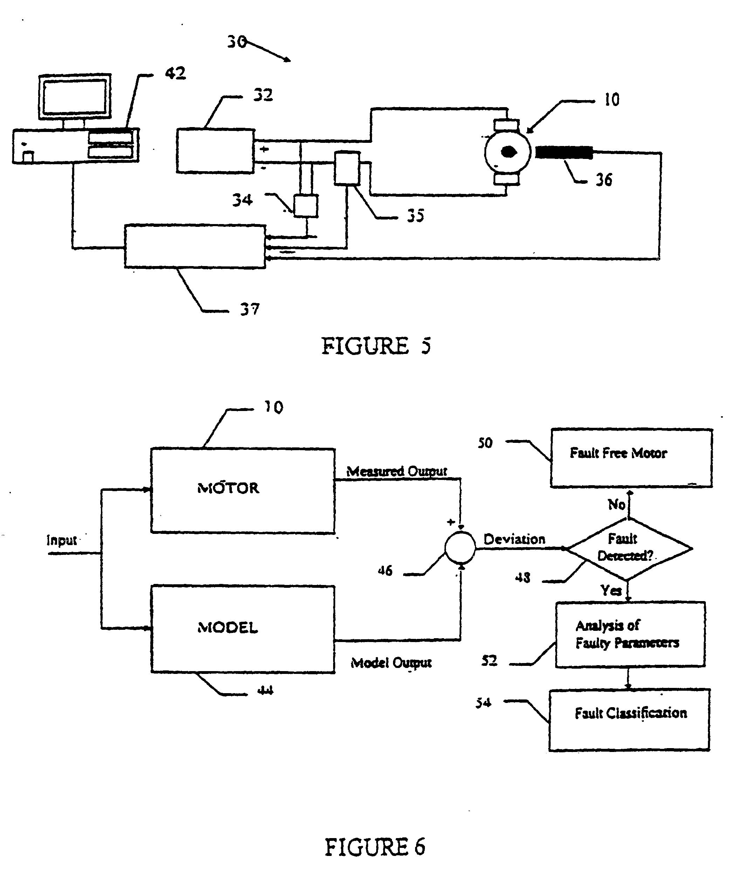

Referring now to Figure 5, a preferred embodiment of a motor condition monitoring system 30 according to the present invention is shown. System 30 comprises motor 10, a source of power 32, which may be either line voltage or a power supply such as Hewlett Packard 6010A, a plurality of sensors 34, 35 and 36, a multifunction board 37 and computer 42. When voltage is applied, motor 10 ramps to its operating speed, usually within 25 millisecond of the application of power, with shaft 16 rotating at a speed that is dependent in part on the applied voltage and the load. The speed of motor 10 is detected by tachometer sensor 36 converted from an analog signal to a digital signal by multifunction input/output board 37 and transmitted to computer 42. Tachometer sensor 36 may be a rotational speed encoder or a built-in tachometer designed into motor 10. The multifunction board is further coupled to a voltage sensor 34, which may be a 1:100 voltage dividing probe by way of example, and a current sensor 35 preferably with a minimum response time of 23 nanoseconds (examples of acceptable current sensors include the Tektronix 6303, a 100 amp ac/dc current probe, the Tektronix 502a power module and the Tektronix 503b ac/dc current probe amplifier). Signals from sensors 34 and 35 are also conditioned by board 37 and input to computer 42. Computer 42 records sensor data in its memory (not shown).

Computer 42 implements a fault detection and diagnostic model of an ideal motor which is also stored in memory. In the preferred embodiment, the model of the motor is initially developed using a multivariable system identification algorithm, Experimental Modeling Toolbox (EMT) developed by Ahmet Duyar and now commercially available from Advanced Prognostic Systems, Inc. 4201 North Ocean Boulevard. Suite 206, Boca Raton, Florida 33431. EMT is an experimental modeling tool that generates a mathematical equation describing the dynamic relationships between input and output measurements obtained from experiments designed to provide characteristics of the system under a selected range of possible modes of operation. Such information includes the bandwidth of the system, the optimal scan rate and duration, and an input signal rich enough to exercise the system over the complete bandwidth of the system. As is known in the field, experimental modeling is the selection of mathematical relationships that seem to fit the observed input and output data. Accordingly, during the modeling process, equations are developed that describe the behavior of the various system elements and the interconnections of these elements.

The experimental model of the system is described by a set of differential equations represented in matrix form. The EMT program determines the structure of the system, that is, the order of the system, the parameters and the constant coefficients of the variables of the differential equations. In the preferred embodiment, the structure is determined by developing an information matrix utilizing the input and output data. The row by row rank search of this matrix is utilized to determine the structure of the system.

Once the structure of the system is determined, the number of parameters contained in the set of differential equations is known. The measured data is utilized with the set of differential equations containing unknown coefficients to generate several equations. The number of generated equations is more than the number of unknown coefficients. Least squares technique is utilized to determine the unknown coefficients in a manner known in the art.

The model based fault detection and diagnostic scheme of the present invention describes a fault free motor with a series of equations described in more detail below. Since faults in motor 10 change the parameters, the equations of motor 10 will differ from the expected equations generated by the model. The scheme of the present invention relies on the concept of analytical redundancy where signals generated by the model are compared to the measured signals obtained from motor 10 to determine whether the motor is properly functioning. The model replaces the need to develop a priori information about the motor. Based on the comparison, computer 42 determines if the motor is operating fault free by generating residual quantities and their analysis. The present invention develops forecasts of information vital to early diagnosis of impending failures of electric motors while in operation under unknown loads.

By way of explanation, consider a fault free system described by the following discrete state space equations:

$$x(k+1) = A\,x(k) + B\,u(k) \tag{1}$$

$$y(k) = C\,x(k) \tag{2}$$

where x, u, and y are the nx1 state vector, the px1 input vector, and the qx1 output vector, respectively and k denotes discrete time increments. The A, B, and C are the known nominal matrices (parameters) of the system with appropriate dimensions. Using a fractional horsepower electric motor, by way of example, the experimental model uses input voltage, current and speed measurements.

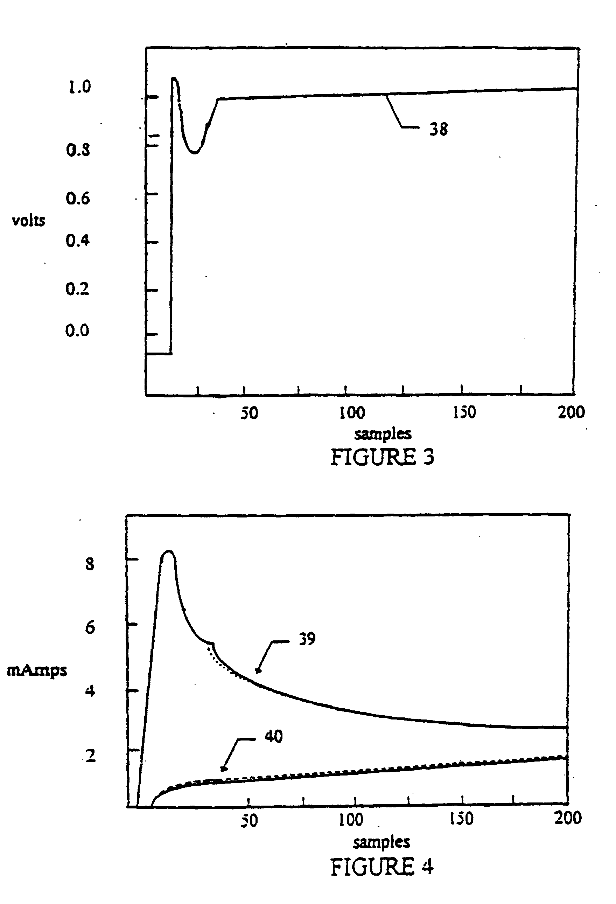

In Figure 3, a plot of input voltage 38 used to power up motor 10 is shown. In the preferred embodiment, input voltage 38 is a step input and is represented in the experimental model as a row vector containing the measured voltage. Figure 4 shows the experimentally determined current and speed output signals 39 and 40, respectively, with the measured current and speed output signals shown with a solid line. The resulting system description may be represented by equations (3) and (4) where the A matrix, in state-space representation, by way of example, is of the form:

| 0 | 0 | 0 | 0 | 0 | 0 | 0 | 0 | -00010 | 93.3676 |
|---|---|---|---|---|---|---|---|---|---|
| 0 | 0 | 0 | 0 | 0 | 0 | 0 | 0 | 0.0000 | 0.0020 |
| 1.0000 | 0 | 0 | 0 | 0 | 0 | 0 | 0 | -0.1857 - | 260.2940 |
| 0 | 1.0000 | 0 | 0 | 0 | 0 | 0 | 0 | -0.0001 | -0.0920 |
| 0 | 0 | 1.0000 | 0 | 0 | 0 | 0 | 0 | 0.0258 | 487.7519 |
| 0 | 0 | 0 | 1.0000 | 0 | 0 | 0 | 0 | 0.0001 | 1.0220 |
| 0 | 0 | 0 | 0 | 1.0000 | 0 | 0 | 0 | 0.4119 | -636.3152 |
| 0 | 0 | 0 | 0 | 0 | 1.0000 | 0 | 0 | -00002 | -2.7525 |
| 0 | 0 | 0 | 0 | 0 | 0 | 1.0000 | 0 | 0.5182 | 315.4224 |
| 0 | 0 | 0 | 0 | 0 | 0 | 0 | 1.0000 | 0.0002 | 2.8204 |

the B matrix is of the form:

-2.6188
0.0012
4.3719
0.0092
-3.5824
-0.0259
1.0257

0.0156
1.0915
0.0000

and the output C matrix, which associates the variable with the output, is of the form:

| 0 | 0 | 0 | 0 | 0 | 0 | 0 | 0 | 1 | 0 |
|---|---|---|---|---|---|---|---|---|---|
| 0 | 0 | 0 | 0 | 0 | 0 | 0 | 0 | 0 | 1 |

In addition to the discrete A, B and C matrices of the system which are determined by the modeling program, a standard error of estimate (SEE) is also determined. The SEE provides an estimate of the modeling error by comparing the modeled output with measured output. For the above example, the SEE for the model is 2.8% for the current output and 0.67% for the speed output.

When a fault occurs in motor 10, the parameters and consequently the response of system 30 will be different. Denoting the faulty parameters and variables of the system with subscript of, the equations describing the faulty system become:

$$xf(k+1) = Af\ xf(k) + Bf\ uf(k) \qquad (3)$$

$$yf(k) = Cf\ xf(k) \qquad (4)$$

In its simplest form, a residual vector, r(k), may be defined as the differences between the output of the fault free system and the output of the faulty system as:

$$r(k) = yf(k) - y(k) \qquad (5)$$

In the absence of the noise and the modeling errors, the residual vector r(k) is equal to the zero vector under fault free conditions. A nonzero value of the residual vector indicates the existence of faults. When noise and modeling errors are present, the effect has to be separated from the effect of faults by comparing the residual magnitudes with selected threshold values. Using the observed distribution of residuals under fault free conditions, the threshold values are determined by selecting a level of confidence (within three standard deviations) so that false alarms and missed fault are minimized.

Referring now to Figure 6, the multivariable identification algorithm, EMT, is used to develop a base line experimental model 44 of motor 10. Model 44 comprises the parameters of the difference equations, i.e., A, B, and C and their orders, i.e., n in equations (1) and (2). As opposed to parameters of the theoretically derived model, the experimental model parameters do not provide physical meanings. In other words, the changes in these parameters may not be used to understand cause-effect relationships. Though the physical meaning of the parameters are lost, the experimental model provides a sufficiently accurate representation of motor 10, since it is not derived using any assumptions. System 30, however, eliminates the need to rely on a priori information about the structure of motor 10 other than the assumption that motor 10 is initially fault free.

The outputs of model 44 are evaluated with the EMT algorithm by computer 42 using the measurements obtained from the voltage sensor 34, the speed sensor 36 and the current sensor 35 to obtain the model output. The model output is compared to the output of the motor at indicated by summer 46 to generate residual r(k). Comparator 48 determines if the residual vector r(k) is equal to the zero vector and correspondingly that the motor is operating under fault free conditions. If comparator 48 determines that the residual vector r(k) has a nonzero value, one or more faults are indicated. However, since noise and modeling errors are typically present, the residual vector r(k) value is first compared to selected threshold values to eliminate false readings. If the residual value is less than the threshold it is more likely that the nonzero value is due to such noise or modeling error and motor 10 is deemed to be fault tree. System 30 then reports the fault free nature of the system, as indicated at box 50. However, if the residual value exceeds the threshold a fault is indicted and system 30 begins the analysis 52 of the fault. Based on the analysis 52, the fault is classified and reported at 54 to the user or retained on computer 42 for future reference.

By using a model based diagnostic routine, the current response of the motor under fauit free conditions can be modeled and subsequently compared to the current response of the same motor during operation. In the present invention, computer 42 includes means for iteratively performing an fault detection algorithm for predicting, detecting and classifying mechanical faults of electric motors. The system and method of the present invention may be used in both production and operational environments.

Fault classification is accomplished by determining changes occurring in the parameters of motor 10 and associating the changes with motor faults by using physical parameters of a theoretically obtained model. Consider the simplified theoretical equations (6) and (7) describing a universal motor capable of operating on either direct- or alternating current subject to a DC voltage input:

$$L \, di/dt + R \, i = V + k1 \, w \, i \tag{6}$$

$$J \, dw/dt + f \, w = k2 \, i2 + M \tag{7}$$

where L, R, J and f are the inductance, the resistance, the moment of inertia and the friction coefficients of the motor, respectively, while k1 and k2 are the motor constants. In equations (6) and (7), the output variables, the current and the speed, are denoted by i and w, respectively, while the input variable, the voltage, is denoted by V. The load is denoted by M.

In the MCM algorithm, the load M is not generally available or easily measured. Therefore, it is necessary to operate on equations (6) and (7) to eliminate the load term for use by the diagnostic observer. In one embodiment, the diagnostic observer simply bases the model on equation 6 which is independent of load. Although partial information is provided to the diagnostic observer in such embodiment, motor friction and constant k2 are not available and there may be a higher percentage of unknown fault reports. Accordingly, if such information is necessary, the diagnostic observer may take the derivative of equation (7) which will eliminate the load term assuming a constant load. As will be apparent to one skilled in the art, other possible mathematical means are available for eliminating the load term such as expressing equations (6) and (7) in matrix form and multiplying both sides with appropriate matrix operators.

Referring again to Figures 1 and 2, common mechanical faults may arise from an unbalanced rotor 12, unevenly torqued screws 28, or defective bearings 18, collector 22, or pulley 20. These mechanical faults cause vibration and noise once motor 10 is installed and operating with load M. Recognizing that mechanical vibration implies a physical displacement, the vibration caused by bearing flaws will induce periodic displacement in shaft 16. In an electric motor, the drive shaft is turned by an armature assembly.

Mechanical faults will cause misalignment of the rotor, which in turn causes the air gap to be non-symmetric and changes the inductance, the resistance and the motor constant parameters all of which are included in equation (6).

Since the current passing through the motor is, in part, a function of the magnetic field in the air gap between the armature and the stator (or field coils). The periodic displacement induced in the drive shaft effect the symmetry of the air gap and the magnetic field in the air gap. The magnetic field in the air gap, in turn, effects the current through the motor. Since the perturbing influence on the magnetic field in the air gap is periodic and of known frequency, so is the effect on the current.

Accordingly, a change in the nominal value of the inductance parameter, L, is associated with an imbalanced rotor fault. An observed change in the resistance parameter, R, is considered as an indication of a collector fault. A bearing fault is determined when the change in inductance coefficient exhibits an oscillatory behavior and/or when both inductance and the friction coefficients change in tandem.

Fault free and faulty parameters and the standard deviations of fault free parameters are shown in Tables 1 and 2. In Table 1, for a given voltage V and load M, the current and speed output values predicted by the model 44 are shown together with selected tolerance parameter (three standard deviations) and an example of current and speed measurements. As will be noted, the current measurement exceeds the predicted value by more than three standard deviations. Accordingly, a fault is indicated.

TABLE 1

| Outputs | Std Error Of Estimate For Base Motor | Three Std Deviation | Example:Reading Indicative of Faulty Motor |
|---|---|---|---|
| i | 0.0072 | 0.0072 | 0.0098 |
| ω | 0.0197 | 0.0025 | 0.0245 |

The parameters of faulty motor 10 are examined in Table 2. As will be noted, the inductance, L, of faulty motor 10 exceeds the corresponding inductance parameter predicted by model 44 by more than one standard deviation while all other parameters are less than the predicted value plus one standard deviation. As noted above, this type of fault is indicative of an imbalanced rotor fault which is reported by the fault classification element 54 of system 30.

TABLE 2

| | Base Motor Parameters | Standard Deviations Of Base Motor Parameters | Example: Faulty Motor Parameters |
|---|---|---|---|
| L (inductance) di/dt | 0.0434 | 0.0005 | 0.0445 |
| R (Resistance) i | 1.6269 | 0.1087 | 1.7236 |
| f (friction coefficient) $\omega$ | 1.1517 | 0.0270 | 1.1632 |
| kt (motor constant)i | 377.4760 | 3.3765 | 374.7121 |

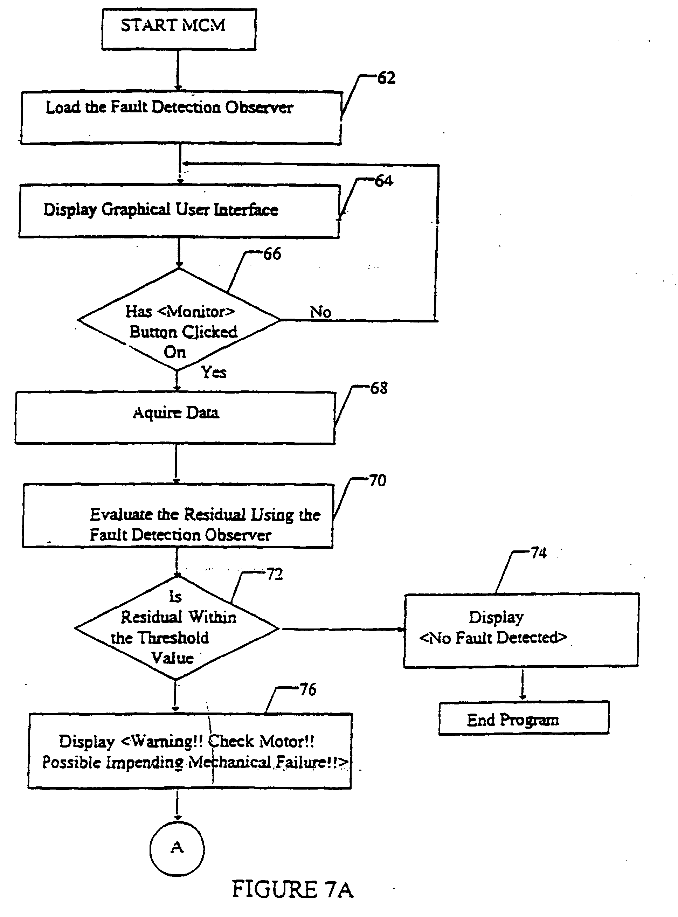

The flow diagram of Figure 7A-7B summarizes the steps for implementing system 30 once model 44 has been developed. Specifically, at selected intervals computer 42 loads model 44 into memory, step 62, and displays on the display portion of computer 42 information for the user, step 64. Upon receiving instruction to initiate the monitoring of motor 10, at pre-specified intervals or continuously, system 30 begins to acquire data, steps 66 and 68, from sensors 34-38. Data acquisition continues at a rate that may be determined by the user. Computer 42 calculates residual values $r(k)$ which is then compared to the expected residual developed by model 44, step 72. If the residual is within the threshold limits, the motor is operating fault free and this information is displayed on the display of computer 42 to the user at step 74. If, however, a fault is indicated, this information is displayed on the display, step 76.

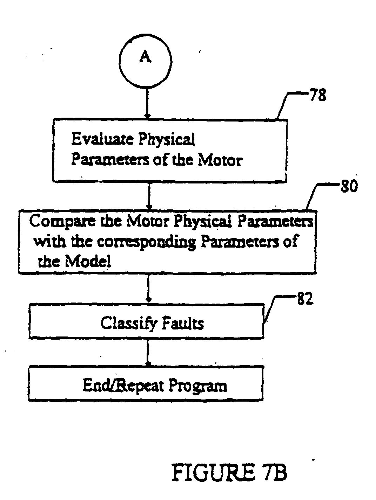

Once a fault is detected, system 30 is able to evaluate the fault and provide diagnostic information to the user. Using the predictive nature of the present invention, it is possible to avoid costly unplanned catastrophic failure. As shown in Figure 7B, the diagnostic observer portion of model 44 evaluates the physical parameters, that is current, i, and speed, w, of motor 10 at step 78 and compares these parameters with the corresponding parameters of model 44 (see also Table 2). Based on the comparison, system 30 is able to classify and display the mechanical basis for the fault or degradation in motor performance as shown at step 82. Model 44 replaces the need to develop a priori information about the motor.

The algorithm performed by computer 42 is referred to in Figures 7A and 7B as a Motor Condition Monitor (MCM). The basic concept in monitoring the condition of the motor is to either intermittently or continuously observe the parametric variations with reference to the same parameters evaluated when the motor is known to operate satisfactorily, as an example, when it is first put into operation when it is known that the motor is running free of faults. During subsequent operation of the motor, the deviation of the outputs, from the reference outputs. This deviation is then compared with predetermined threshold values. If the deviation exceeds the threshold value, a fault is detected. The fault is classified by evaluating the parameters of the diagnostic model and comparing the parameters with their initial value again using appropriate threshold values for these parameters.

In the manufacture of electric motors, it is possible to develop a model that encompasses a range of production process variation rather than using the parameters obtained from a single motor as described above in describing the MCM system and method. This concept is utilized to develop methods for the detection and diagnosis of mechanical faults of electric motors as part of the testing procedure during the manufacturing process and particularly, for quality assurance process step employed by most manufacturers just prior to shipping a motor. For quality assurance applications a method and an algorithm, called Motor Quality Monitor (MQM), utilizing this method of the present invention is discussed below.

Basic functions of the MQM algorithm are to test the electric motor, display the test results, control the experimental testing (that is, developing a base model as will be described below in more detail) and store the measured and digitized data in memory for archival purposes.

Since there is no reliable technique or measurement to identify fault free motors, first a method to obtain the model of typical fault free motors (the "base model") is developed.

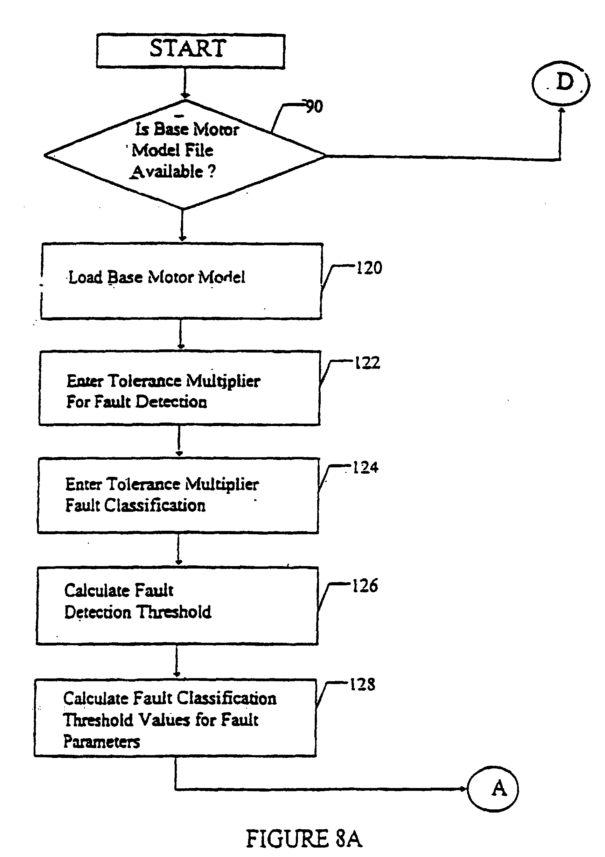

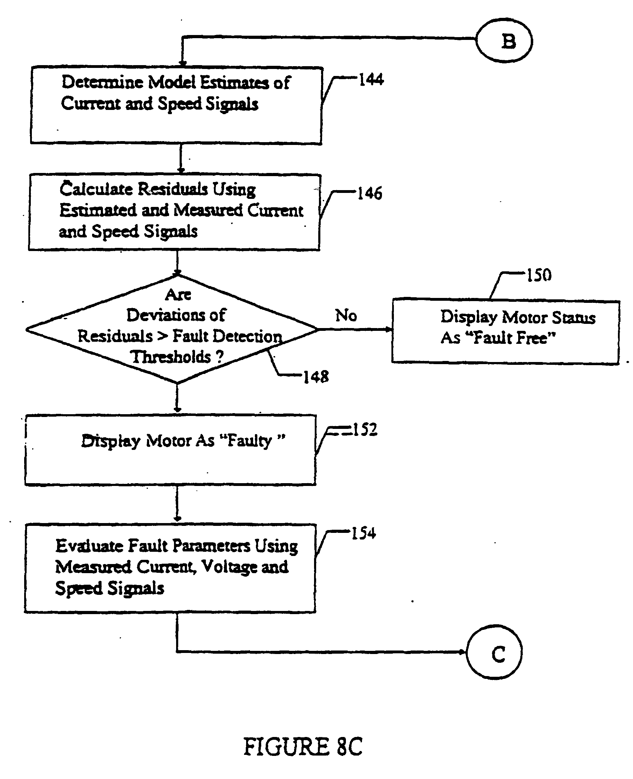

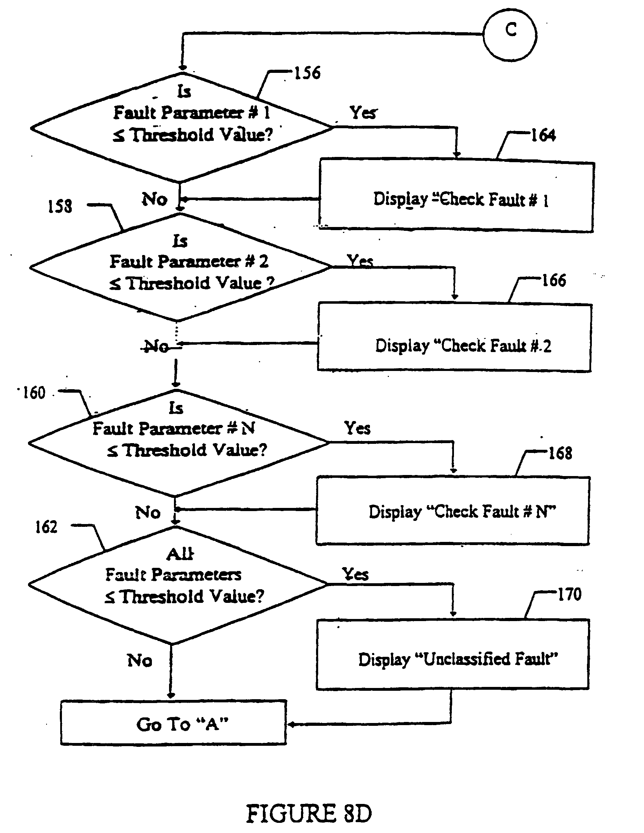

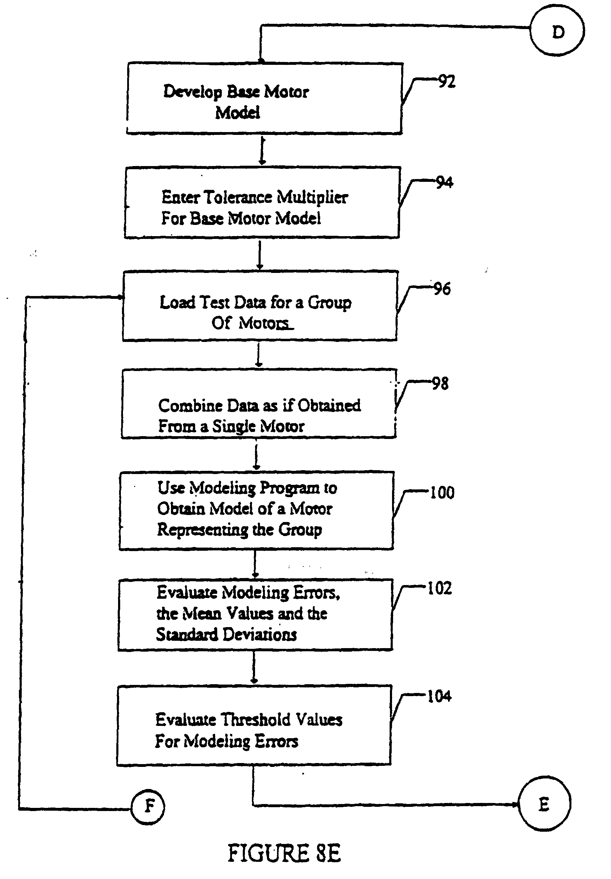

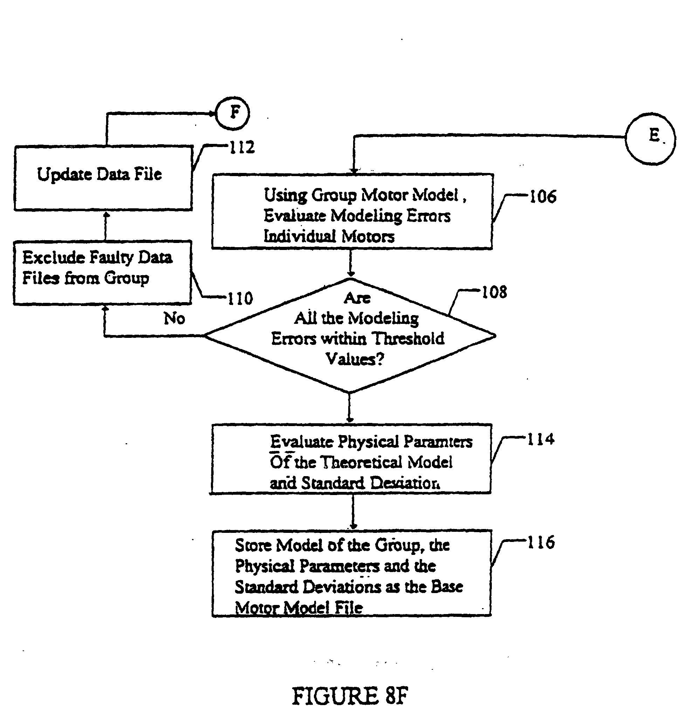

A more detailed explanation of the MQM method is depicted in Figures 8A-8F. The MOM method encompasses two basic functions: (1) development of a base motor model and (2) ongoing quality assurance testing of fractional horsepower electric motors. A user may select either function from a menu presented on the display device of computer 42. In the preferred embodiment, "user defined" parameters are entered, threshold limits and the number of motors to be tested, for example, before the user chooses one of the following three options: "Base Motor Model Development", "Select a Base Motor Model" or "Quality Assurance Test".

If a base motor is not available, step 90, the "Base Motor Model Development" option, step 92, will need to be initially selected where the user is asked to supply the information, presented in Table 3, if different from the default setting, step 94.

TABLE 3

| USER SUPPLIED INFO | DESCRIPTION OF INFO | SETTING AND/OR OPTIONS |
|---|---|---|
| Enter Scan Rate | Sampling frequency of data acquisition | 500Hz to 24kHz Initially set to 24KHz |
| Enter Scan Time | Duration of data acquisition | 0.4 sec to 1.0 sec |
| Enter Date File (loc/name) | Location and name of files where test data is stored | c:\File ID |
| Enter Tolerance Multiplier | Adjustment factor: multiplies standard deviations to obtain threshold variable | typical = 3x |
| Enter Base Motor Name | identifies type of motor to be modeled | Universal Motor |

The selection of "Base Motor Model Development" option is obligatory when MQM is first installed. The user has the option of developing base motors for different types of electric motors or even for the same type of electric motors but with different tolerance multipliers. The model of the motor, its parameters and their standard deviations are obtained and stored in the designated data file.

The base motor model is developed from a group of motors known to include mostly fault free motors, step 96. In one preferred embodiment of the present invention, data obtained from a group of electric motors are utilized to develop the base motor model. As will be appreciated by one skilled in the art, such a group of motors may contain fault free motors as well as some faulty motors due to the inherent inefficiencies of the manufacturing and testing process.

Using the EMT software program, an experimental model of the selected motor type is developed that represents the characteristics of the selected motor type, steps 98-100. At step 102, the model is evaluated for obvious modeling and threshold errors, steps 102-104.

Using the base motor model developed from the group, each of the motors in the group is then tested against the experimental base motor model using tolerance values obtained from the projected standard deviation of the SEE, step 106. If the outputs of one of the motors in the group deviates from the outputs of the experimental model by more than the respective tolerance values, that motor is removed from the group and the data files are groomed to remove the faulty data, steps 108 -112. Further refinement of the base motor model is then undertaken using the test data for the subset of motors remaining in the group. After eliminating all motors having outputs outside of tolerance values set by the experimental model, it is possible to further yet refine the experimental model by evaluating modeling errors, the mean and standard deviations of the group, step 114 until the group contains only those motors whose outputs are within the tolerance factors selected for the experimental model. After repeating this iterative process, the experimental model will represent the characteristics of fault free motors manufactured to the same specifications. The experimental model is stored as the base motor model in a database retained in the memory of computer 42 for future reference, step 116.

If the base motor model already exists, the above process may be shortened by merely reloading the base motor model into active memory of computer 42 and the user may select the "Select a Base Motor Model" option and then begin performing the "Quality Assurance Test". Various options may be presented to the user. By way of example, the base motor model may correspond to a universal, shaded pole induction motor, synchronous motor or any other fractional horsepower electric motor. Referring again to Figure 8A, the appropriate base motor model for the motors under test is loaded into computer memory if the "Select a Base Motor Model" option is selected or if the "Quality Assurance Test" option is selected, the testing begins for the default motor type, step 120. At this time the user may enter adjustments to the tolerance multipliers for fault detection and fault classification, steps 122 and 124. The MQM algorithm then calculates the appropriate fault detection and fault classification thresholds, step 126-128.

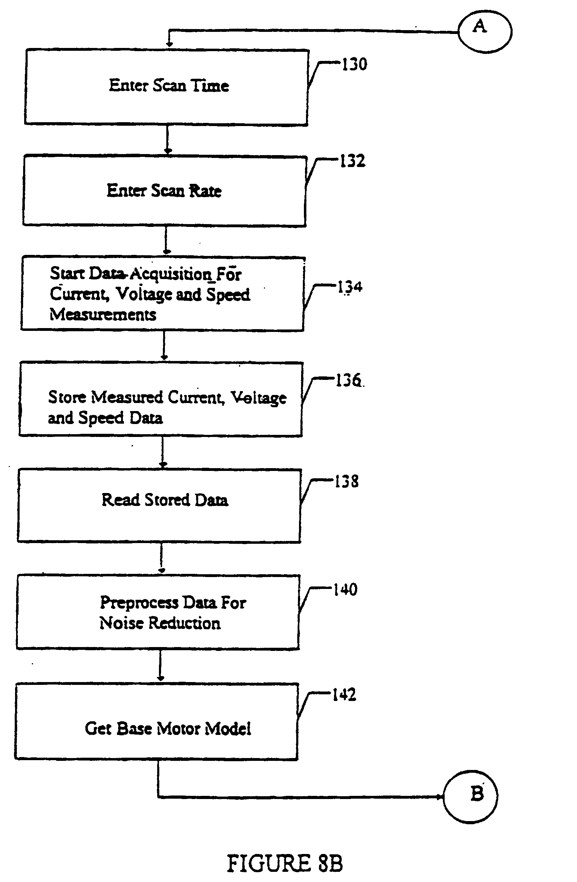

Figure 8B shows the measurement portion of the MQM algorithm, where the measured values of the motor outputs are compared with the outputs obtained from the base motor model using selected threshold values during the testing of electric motors during the manufacturing process for quality assurance purposes. The threshold values are determined by multiplying the tolerance values used in developing the experimental base motor by the tolerance multiplier. The MQM algorithm allows the multipliers to be determined by the quality assurance engineer who will take into account the acceptable variations of the outputs of the motors due to normal manufacturing variations. If the deviations exceed the pre-selected threshold values, the motor being tested is defined as having a fault.

Specifically, once the base motor model is selected, the user inputs the necessary parameters for performing the "Quality Assurance Test" at steps 130-134 as summarized in Table 4.

TABLE 4

| USER SUPPLIED INFO | DESCRIPTION OF INFO | DEFAULT SETTING AND/OR OPTIONS |
|---|---|---|
| Enter Scan Rate | Sampling frequency of data acquisition | 500Hz |
| Enter Scan Time | Duration of data acquisition | 0.5 sec |
| Enter Tolerance Multiplier for Fault Detection | Adjustment factor: multiplies standard deviations to obtain threshold variable for fault limit | 3x |
| Enter Tolerance Multiplier for Fault Classification | Adjustment factor: multiplies standard deviations to obtain threshold variable for fault classification | 1x |

When running the "Quality Assurance Test" the algorithm calculates the fault detection and classification limits according to the selected motor type and the appropriate tolerance multipliers. The algorithm initiates the data acquisition to acquire real-time voltage, speed and current signals from the motor under test, step 134. These signals are digitized using previously entered scan rate and scan time values, steps 130-132. The digitized signals are stored in memory, step 136, and preprocessed to eliminate noise using a butterworth software fitter or any one of commercially available filter products, step 140.

The real-time voltage, speed and current signals are used by the base model motor to determine a modeled state representation of the motor under current conditions step 142 and 144. As indicated at step 146, the residual of the base model motor estimate and the actual residual of the motor under test are calculated and compared at step 148. The deviation of the calculated residuals are then compared with the fault detection threshold values. If the deviation of the outputs of the motor being tested are within the tolerance limits, the motor is identified as a fault free motor and a message is displayed or otherwise recorded, step 150.

When the motor is detected as faulty, a message is displayed, step 152 and, as indicated at step 154, classification of the fault is accomplished using the diagnostic model in a similar manner as described above. In summary, theoretically derived equations (6) and (7) describing electric motors are utilized as the diagnostic model. The physical parameters of the diagnostic model are determined experimentally from the data obtained from the group of the motors mentioned above. The physical parameters of the diagnostic model and the related standard deviations are stored in the memory of computer 42.

With the motor fault detected, the physical parameters of the faulty motor are evaluated by the MQM algorithm and compared at with the corresponding parameters of the base motor model, steps 156-162. The result of this comparison is used to classify the motor fault and display diagnostic information.

If the deviations of residuals are above the threshold values, the motor status is classified "FAULT FOUND" or a similar such phrase on the informative part of the display portion of computer 42. Once identified, the physical parameters of the faulty motor are evaluated. These parameters are compared with the physical parameters of the base motor model using the fault classification threshold values (see Table 4). For a universal electric motor, the physical parameters are the inductance, resistance and friction coefficients and motor constants as set forth in equations (5) and (6). Each of the parameters from the faulty motor are compared with the above mentioned fault classification threshold values. And a representative sample of one possible decision tree for classifying faults is shown at steps 164-170. For example, if the inductance parameter of the faulty motor exceeds the fault classification threshold value for inductance, the decision is displayed as "CHECK BALANCE".

If the resistance parameter of the faulty motor exceeds the fault classification threshold value for resistance, the decision is displayed as "CHECK COLLECTOR".

If both the friction and the inductance parameter of the faulty motor exceed the fault classification threshold values, the decision is displayed as "CHECK BEARING".

If more than one threshold value is exceeded at the same time, all resulting decisions are displayed.

If the magnitude of all parameters are less than the corresponding threshold value, the decision is displayed as "UNCLASSIFIED" on the informative part of the display. This may occur due to the cumulative effect of changes in each parameter on the outputs of the motor. In such a situation the model may have multiple, but small, faults which may cumulate to cause the model outputs to exceed the threshold values. However, since the threshold value is user selected, it is possible to tighten tolerance values for each parameter so that it is possible to detect such marginal faults.

The MQM method is particularly well suited for use in electric motor repair shops to diagnose faults and preventative maintenance purposes. In such an application base motor models for several electric motors, varying by size and by manufacturer, are stored in computer 42. Upon receipt of a defective motor, the repairman selects the base motor model of the motor being tested and performs fault detection and diagnostic.

The method and apparatus can also be used for condition monitoring and predictive maintenance applications. In this embodiment, the third embodiment, the MQM algorithm replaces the MCM algorithm for either intermittent or continuous condition monitoring applications.

In an additional embodiment of the invention, the MQM and MCM algorithms are used directly with an existing quality assurance or a condition monitoring system, respectively, where data acquisition capabilities for measuring voltage, speed and current already exist.

In conclusion, the MCM algorithm and the MQM algorithm are very similar but each differs from the other in two aspects. First in the MCM algorithm, the system does not develop a base motor model. This is due to the nature of condition monitoring where the system is concerned only with monitoring a single motor. For this reason the MCM method advantageously utilizes the customized model of the motor being monitored. The customized model is developed when it is known that the motor is running under fault free conditions. In contrast, the MQM develops a base model that encompasses the variations normally associated with a large population. Accordingly, it is possible for a marginally operating motor to pass the test thresholds set in the MQM model but it is unlikely that continued degradation will go undetected by the MCM since the MCM model is specific to the individual motor.

The second difference that arises between the two algorithms is that the MCM is necessarily constrained by operational requirements. For example, the input signal applied to the motor is dependent on the requirement imposed by the application. One may appreciate that the input applied to model 44 may not be as "rich" of an input signal as could be applied during MQM testing. Further, under MCM testing, the actual load applied to the motor is unknown and may vary during the period in which measurements are obtained from sensor 34-38. Under these circumstances, only that portion of the model unaffected by the load is modeled. As an example, only equation (6) will be used to model the current signal using measured voltage and speed input signals to obtain results using the diagnostic observer. In alternative embodiments, techniques, such as taking the derivative of equation (7) in the case of a constant load, may be employed to eliminate the unknown load term. In such embodiments, equation (6) and the derivative of equation (7) may be combined to enhance the results obtained by the diagnostic observer.

While certain exemplary preferred embodiments have been described and shown in the accompanying drawings, it is to be understood that such embodiments are merely illustrative of and not restrictive on the broad invention, which is only limited according to the wording of the appended claims.

**Claims**

1. A motor condition monitoring system (30) for monitoring the operational condition of a motor (10) comprising a plurality of sensors (34, 35 and 36) for measuring a plurality of operating signals of said motor (10) and a computer means (42) able to be coupled to said motor (10) by the sensors (34, 35 and 36), **characterized in that** the computer means (42) comprises a model of said motor, and means for applying said measured plurality of operating signals to solve a linear discrete-time state equation; means for calculating a residual to compare the solution of said state equation with the solution suggested by said model; means for determining, based on said calculating and comparison, whether said motor is operating without a detected fault; means for correlating said residual to a fault in the event said motor (10) is operating with a detected fault and communicating the existence of said fault to prevent unanticipated motor (10) failure; and means for repeating said steps, at selected time intervals during operation of said motor (10).

2. A motor condition monitoring system (30) as in claim 1, comprising means for calculating a model output voltage signal based on the actual input voltage and current applied to the motor.

3. A motor condition monitoring system (30) as in claim 1, further comprising a means for classifying mechanical faults of said electric motor by comparing current values of said operating parameters with reference values of said operating parameters.

4. A motor condition monitoring system (30) as in claim 1, **characterized in that**, the plurality of sensors (34, 35 and 36) are analog sensors.

5. A motor condition monitoring system (30) as in claim 1, **characterized in that**, the plurality of sensors (34, 35 and 36) are a voltage sensor (34), a current sensor (35) and a tachometer sensor (36) respectively.

6. A motor condition monitoring system (30) as in any one of the preceeding claims, further comprising a multifunction board (37) for recieving the outputs of the plurality of sensors (34, 35 and 36) and converting the analog signal to a digital signal and transmitting the transformed signal to the computer (42).

7. A motor condition monitoring system (30) as in any one of the preceeding claims, **characterized in that**, said motor (10) is fractional horsepower electric motor.

8. A method for monitoring the operation of an electric motor (10) to detect faults capable of causing failure of said motor (10) comprising the steps of:

   providing a model of said motor (10) on a computer (42);

   coupling said motor (10) to said computer (42) by a plurality of sensors (34, 35 and 36);

   measuring a plurality of operating signals of said motor (10) with said sensors (34, 35 and 36);

   applying said measured plurality of operating signals to solve a linear discrete-time state equation;

   calculating a residual to compare the solution of said state equation with the solution suggested by said model;

   determining, based on said calculating and comparison step, whether said motor (10) is operating without a detected fault;

   correlating said residual to a fault in the event said motor (10) is operating with a detected fault and communicating the existence of said fault to prevent unanticipated motor (10) failure; and

   repeating said steps, other than said providing a model step, on selected time intervals during operation of said motor(10).

9. The method of claim 8 wherein said model developing step comprises the steps of:

   measuring voltage, current and speed of said electric motor (10);
   multiplying the measured voltage (V), current (i) and speed (w) of said electric motor (10) with invariants for obtaining a representation of the fault free system; calculating and retaining the result of the discrete state space equations:

   $$x(k+1) = A\, x(k) + B\, u(k)$$

   $$y(k) = C\, x(k)$$

   where x, u, and y are the state vector, the input vector, and the output vector, respectively and k denotes discrete time increments and where A, B, and C are known nominal matrices of said electric motor (10);
   repeating the measuring and multiplying steps;
   calculating the result of the discrete state space equations for actual values:

   $$xf(k+1) = Af\, xf(k) + Bf\, uf(k)$$

   $$yf(k) = Cf\, x(k)$$

   comparing the differences between y(k) and yf (k); and
   repeating said repeating, calculating and comparing sequence of steps until the difference exceeds a selected threshold.

10. The method of claim 9 wherein said step of measuring a plurality of operating signals comprises the measurement of the current output (i) of said motor (10), the voltage (V) applied to the motor (10), and the speed (w) of the motor (10) during a selected interval.

11. The method of claim 9 wherein said step of developing the model of said motor (10) comprises obtaining motor invariants for the inductance (L), the resistance (R), the moment of inertia (J) and the friction coefficient (f) of said motor (10), and combining said invariants with the measured signals according to the following equations:

$$L\ di/dt + R\ i = V + k1\ w\ i$$

and

$$J\ dw/dt + f\ w = k2\ i2 + M$$

where k1 and k2 are motor constants and M represents the motor load.

12. The method of claim 11 wherein said step of correlating and communicating further comprises the steps of:

indicating an imbalanced rotor (12) in response to change of said L di/dt operating parameter;

indicating a collector (22) fault in response to change of said Ri parameter;

indicating a bearing (18) fault in response to oscillatory variation of said L

di/dt parameter; and

indicating a bearing (18) fault in response to change of both said L di/dt and said f w parameters.

13. The method of claim 9 wherein said interval is between 400 milliseconds and 1000 milliseconds.

14. The method of claim 10 wherein said operating parameters are sampled at a sampling frequency of between 500Hz and 24kHz.

15. The method of claim 8 further comprising, when said sequence of steps results in a difference that exceeds said selected threshold, the steps of:

selecting a parameter threshold value for inductance (Ldi/dt), motor resistance (Ri), motor inertia (J dw/dt) and motor constants (fw, k1wi, and i2 k2); and comparing each product, L di/dt, Ri, J dw/dt, fw, k1wi, and i2 k2 with a corresponding one of said selected threshold values.

16. The method of claim 15 further comprising the step of displaying the results of said comparing steps.

17. A model based fault detection and diagnosis method for detecting faults in a plurality of motors (10) of a common motor type and developing diagnostic information for correction of said faults, said method comprising the steps of:

generating a modeled state representation of said plurality of motors (10), said modeled state representation including a threshold limit derived from said plurality of motors (10);
measuring operating parameters of each of said motors (10) in said plurality of motors (10) to develop a modeled state representation of each of said motors (10); comparing said modeled state representation of said plurality of motors (10) with said modeled state representation of each of said motors (10) in said plurality of motors (10) ;
determining whether each of said motors (10) is a faulty motor (10);
removing from said plurality of motors (10) , in response to said determining step, said faulty motor (10) ;
changing said threshold limit of said modeled state representation of said plurality of motors (10) in response to detection of said faulty motor (10) ; and
repeating said comparing, determining, removing and changing steps for each of said motors (10) in said plurality of motors (10).

**18.** The method of claim 17 wherein, said method comprising the steps of:

selecting a plurality of motors (10) comprising motors (10) operating fault free and motors (10) operating with one or more unknown faults;
measuring a plurality of operating signals for each motor (10) in said plurality of motors (10) ;
using said plurality of operating signals, solving a set of discrete state space equations for said plurality of motors (10) , where said set of discrete state space equations are in the form of:

$$x(k+1)=Ax(k)+Bu(k)$$

$$y(k)=Cx(k)$$

where x, u, and y are a state vector, an input vector, and an output vector, respectively, k denotes discrete time increments and A, B, and C are known nominal matrices of said plurality of motors (10) ;
comparing the solution of said set of discrete state space equations for each motor (10) in said plurality of motors (10) with the solution of said set of discrete state space equations for said plurality of motors (10) to identify a faulty motor (10) ; removing said faulty motor (10) from said plurality of motors (10) to form a second plurality of motors (10) ; and
re-calculating said first set of discrete state space equations for said second plurality of motors (10).

**19.** The method of claim 18 wherein said measuring step further comprises the steps of:

measuring voltage, current and speed of each of said plurality of motors (10) with a plurality of sensors;
multiplying the measured voltage (V), current (i) and speed (w) of each of said plurality of motors (10) with selected invariants in accordance with the following motor's invariants equations:

$$L\ di/dt+Ri=V+k1wi$$

$$J\ dw/dt+fw=k2\ i2\ +M$$

to obtain motor invariants for the inductance (L), the resistance (R), the moment of inertia (J) and the friction coefficient (f) of each of said plurality of motors (10) where k1 and k2 are motor constants and M represents the load on each motor (10) of said plurality of motors (10).

**20.** The method of claim 19 wherein, said method comprising the steps of:

comparing the solution of said set of motor's invariants equations for each motor (10) in said plurality of motors (10) with the solution of said set of motor's invariants equations for said plurality of motors (10) to identify a faulty motor (10) ;
removing said faulty motor (10) from said plurality of motors (10) to form a second plurality of motors (10) ; and
re-calculating said motor's invariants equations for said second plurality of motors (10).

**21.** The method of claim 20 further comprising the step of determining whether each motor (10) of said plurality of motors (10) is faulty.

**22.** The method of claim 21 further comprising the step, in response to said determining step, of classifying the fault associated with said each motor (10) of said plurality of motors (10).

**23.** The method of claim 18 wherein said using step further comprises the step of selecting a threshold limit based on two standard deviations about the mean of the combined plurality of operating signals.

**24.** The method of claim 17 further comprising the steps of:

generating a diagnostic model from said plurality of motors (10) , said diagnostic model including physical parameters and a standard deviation associated with each physical parameter, said diagnostic model having a threshold limit associated with each of said physical parameters;

measuring selected physical parameters of each motor (10) in said plurality of motors (10) ;

for each motor (10) , comparíng each of said selected physical parameters to said diagnostic model; and

for each motor (10) , identifying at least one fault, if at least one of said selected physical parameters exceeds said corresponding physical parameter threshold limit in said diagnostic model.

**25.** The method of claim 24 further comprising displaying the results of said identifying step.

**26.** The method of claim 24 wherein said identifying step further comprises the steps of:

indicating an imbalanced rotor (12) in response to a change of said L di/dt term in said first equation;

indicating a collector (22) fault in response to a change of said Ri term in said first equation;

indicating a bearing (18) fault in response to oscillatory variation of said L di/dt term in said first equation; and

indicating a bearing (18) fault in response to change of both said L di/dt and said f w terms in said first and second equations.

**Patentansprüche**

**1.** Motorzustand-Überwachungssystem (30) zum Überwachen des Betriebszustandes eines Motors (10), das mehrere Sensoren (34, 35 und 36) zum Messen mehrerer Betriebssignale des Motors (10) und ein Computermittel (42), das durch die Sensoren (34, 35 und 36) mit dem Motor (10) gekoppelt werden kann, umfasst, **dadurch gekennzeichnet, dass** das Computermittel (42) umfasst: ein Modell des Motors und Mittel zum Anwenden der mehreren gemessenen Betriebssignale, um eine lineare zeitdiskrete Zustandsgleichung zu lösen; Mittel zum Berechnen eines Residuum, um die Lösung der Zustandsgleichung mit der durch das Modell vorgeschlagenen Lösung zu vergleichen; Mittel, die anhand der Berechnung und des Vergleichs feststellen, ob der Motor ohne einen erfassten Fehler arbeitet; Mittel, die das Residuum mit einem Fehler korrelieren, falls der Motor (10) mit einem erfassten Fehler arbeitet, und das Vorhandensein des Fehlers kommunizieren, um einen unerwarteten Motorausfall (10) zu verhindern; und Mittel, die während des Betriebs des Motors (10) diese Schritte in ausgewählten Zeitintervallen wiederholen.

**2.** Motorzustand-Überwachungssystem (30) nach Anspruch 1, das Mittel umfasst, um ein Modellausgang-Spannungssignal anhand der Ist-Eingangsspannung und des Ist-Eingangsstroms zu berechnen, die an den Motor angelegt sind.

**3.** Motorzustand-Überwachungssystem (30) nach Anspruch 1, das ferner ein Mittel umfasst, um mechanische Fehler des Elektromotors zu klassifizieren, indem Stromwerte der Betriebsparameter mit Referenzwerten der Betriebsparameter verglichen werden.

**4.** Motorzustand-Überwachungssystem (30) nach Anspruch 1, **dadurch gekennzeichnet, dass** die mehreren Sensoren (34, 35 und 36) analoge Sensoren sind.

**5.** Motorzustand-Überwachungssystem (30) nach Anspruch 1, **dadurch gekennzeichnet, dass** die mehreren Sensoren (34, 35 und 36) ein Spannungssensor (34), ein Stromsensor (35) bzw. ein Drehzahlsensor (36) sind.

**6.** Motorzustand-Überwachungssystem (30) nach einem der vorhergehenden Ansprüche, das ferner ein multifunktionales Board (37) umfasst, um die Ausgänge der mehreren Sensoren (34, 35 und 36) zu empfangen, das analoge Signal in ein digitales Signal umzusetzen und das transformierte Signal zu dem Computer (42) zu senden.

**7.** Motorzustand-Überwachungssystem (30) nach einem der vorhergehenden Ansprüche, **dadurch gekennzeichnet, dass** der Motor (10) ein Kleinelektromotor ist.

**8.** Verfahren zum Überwachen des Betriebs eines Elektromotors (10), um Fehler zu erfassen, die einen Ausfall des Motors (10) hervorrufen können, das die folgenden Schritte umfasst:

Bereitstellen eines Modells des Motors (10) in einem Computer (42);

Koppeln des Motors (10) mit dem Computer (42) durch mehrere Sensoren (34, 35 und 36);

Messen mehrerer Betriebssignale des Motors (10) mit den Sensoren (34, 35 und 36);

Anwenden der mehreren gemessenen Betriebssignale, um eine lineare zeitdiskrete Zustandsgleichung zu lösen;

Berechnen eines Residuums, um die Lösung der Zustandsgleichung mit der durch das Modell vorgeschlagenen Lösung zu vergleichen;

Feststellen, ob der Motor (10) ohne einen erfassten Fehler arbeitet, anhand des Berechnungs- und des Vergleichsschrittes;

Korrelieren des Residuums mit einem Fehler, falls der Motor (10) mit einem erfassten Fehler arbeitet, und Kommunizieren des Vorhandenseins des Fehlers, um einen unerwarteten Ausfall des Motors (10) zu verhindern; und

Wiederholen der Schritte in ausgewählten Zeitintervallen während des Betriebs des Motors (10) mit Ausnahme des Schrittes des Bereitstellens eines Modells.

9. Verfahren nach Anspruch 8, bei dem der Modellentwicklungsschritt die folgenden Schritte umfasst:

Messen der Spannung, des Stroms und der Drehzahl des Elektromotors (10);

Multiplizieren der gemessenen Spannung (V), des Stroms (i) und der Drehzahl (w) des Elektromotors (10) mit Invarianten, um eine Darstellung des fehlerfreien Systems zu erhalten;

Berechnen und Beibehalten des Ergebnisses der diskreten Zustandsraum-Gleichungen:

$$x(k + 1) = A\, x(k) + B\, u(k)$$

$$y(k) = C\, x(k)$$

wobei x, u und y der Zustandsvektor, der Eingangsvektor bzw. der Ausgangsvektor sind und k diskrete Zeitinkremente bezeichnet und wobei A, B und C bekannte Nennmatrizen des Elektromotors (10) sind;

Wiederholen des Messschrittes und des Multiplikationsschrittes;

Berechnen des Ergebnisses der diskreten Zustandsraum-Gleichungen für Ist-Werte:

$$xf(k + 1) = Af\, xf(k) + Bf\, uf(k)$$

$$yf(k) = Cf\, x(k)$$

Vergleichen der Differenzen zwischen y(k) und yf(k); und

Wiederholen der Folge von Wiederholungs-, Berechnungs- und Vergleichsschritten, bis die Differenz einen ausgewählten Schwellenwert übersteigt.

10. Verfahren nach Anspruch 9, bei dem der Schritt des Messens mehrerer Betriebssignale das Messen des Stromausgangs (i) des Motors (10), der an den Motor (10) angelegten Spannung (V) und der Drehzahl (w) des Motors (10) während eines ausgewählten Intervalls umfasst.

11. Verfahren nach Anspruch 9, bei dem der Schritt des Entwickelns des Modells des Motors (10) das Erhalten von Motor-Invarianten für die Induktivität (L), den ohmschen Widerstand (R), das Trägheitsmoment (J) und den Reibkoeffizienten (f) des Motors (10) sowie das Kombinieren der Invarianten mit den gemessenen Signalen gemäß den folgenden Gleichungen umfasst:

$$L\, di/dt + Ri = V + k1\, wi$$

und

$$J\, dw/dt + fw = k2\, i2 + M$$

wobei k1 und k2 Motorkonstanten sind und M die Motorlast darstellt.

12. Verfahren nach Anspruch 11, bei dem der Schritt des Korrelierens und des Übermittelns die folgenden Schritte umfasst:

Angeben eines im Ungleichgewicht befindlichen Rotors (12) in Reaktion auf eine Änderung des (L di/dt)-Betriebsparameters;
Angeben eines Fehlers des Kollektors (22) in Reaktion auf eine Änderung des Ri-Parameters;
Angeben eines Fehlers des Lagers (18) in Reaktion auf eine Oszillationsänderung des (L di/dt)-Parameters; und
Angeben eines Fehlers des Lagers (18) in Reaktion auf eine Änderung sowohl des (L di/dt)-Parameters als auch des fw-Parameters.

13. Verfahren nach Anspruch 9, bei dem das Intervall im Bereich von 400 Millisekunden bis 1000 Millisekunden liegt.

14. Verfahren nach Anspruch 10, bei dem die Betriebsparameter mit einer Abtastfrequenz im Bereich von 500 Hz bis 24 kHz abgetastet werden.

15. Verfahren nach Anspruch 8, das dann, wenn die Folge von Schritten als Ergebnis eine Differenz hat, die den ausgewählten Schwellenwert übersteigt, ferner die folgenden Schritte umfasst:

Auswählen eines Parameter-Schwellenwertes für die Induktivität (L di/dt), des ohmschen Motorwiderstandes (Ri), des Motorträgheitsmoments (J dw/dt) und der Motorkonstanten (fw, k1 wi und i2 k2); und Vergleichen jedes Produkts Ldi/dt, Ri, Jdw/dt, fw, k1wi und i2 k2 mit einem Entsprechenden der ausgewählten Schwellenwerte.

16. Verfahren nach Anspruch 15, das ferner den Schritt des Anzeigens der Ergebnisse der Vergleichsschritte umfasst.

17. Modellbasiertes Fehlererfassungs- und Fehlerdiagnoseverfahren zum Erfassen von Fehlern in mehreren Motoren (10) eines gemeinsamen Motortyps und zum Entwickeln von Diagnoseinformationen für die Korrektur der Fehler, wobei das Verfahren die folgenden Schritte umfasst:

Erzeugen einer modellierten Zustandsdarstellung der mehreren Motoren (10), wobei die modellierte Zustandsdarstellung eine aus den mehreren Motoren (10) abgeleitete Schwellenwertgrenze enthält;
Messen von Betriebsparametern jedes der mehreren Motoren (10), um eine modellierte Zustandsdarstellung jedes der Motoren (10) zu entwickeln;
Vergleichen der modellierten Zustandsdarstellung der mehreren Motoren (10) mit der modellierten Zustandsdarstellung jedes der Motoren (10);
Feststellen, ob jeder der Motoren (10) ein fehlerhafter Motor (10) ist;
Entfernen des fehlerhaften Motors (10) aus den mehreren Motoren (10) in Reaktion auf den Feststellungsschritt;
Ändern der Schwellenwertgrenze der modellierten Zustandsdarstellung der mehreren Motoren (10) in Reaktion auf eine Erfassung des fehlerhaften Motors (10); und
Wiederholen des Vergleichs-, des Feststellungs-, des Entfernungsund des Änderungsschrittes für jeden der mehreren Motoren (10).

18. Verfahren nach Anspruch 17, wobei das Verfahren die folgenden Schritte umfasst:

Auswählen von mehreren Motoren (10), die Motoren (10), die fehlerfrei arbeiten, und Motoren (10), die mit einem oder mehreren unbekannten Fehlern arbeiten, umfassen;
Messen mehrerer Betriebssignale für jeden dieser mehreren Motoren (10);
unter Verwendung der mehreren Betriebssignale Lösen einer Gruppe diskreter Zustandsraum-Gleichungen für die mehreren Motoren (10), wobei die Gruppe diskreter Zustandsraum-Gleichungen in der folgenden Form gegeben ist:

$$x(k + 1) = A\,x(k) + B\,u(k)$$

$$y(k) = C\ x(k)$$

wobei x, u und y ein Zustandsvektor, ein Eingangsvektor bzw. ein Ausgangsvektor sind, k diskrete Zeitinkremente bezeichnet und A, B und C bekannte Nennmatrizen der mehreren Motoren (10) sind;

Vergleichen der Lösung der Gruppe diskreter Zustandsraum-Gleichungen für jeden der mehreren Motoren (10) mit der Lösung der Gruppe diskreter Zustandsraum-Gleichungen für die mehreren Motoren (10), um einen fehlerhaften Motor (10) zu identifizieren;

Entfernen des fehlerhaften Motors (10) aus den mehreren Motoren (10), um eine zweite Mehrzahl von Motoren (10) zu bilden; und

erneutes Berechnen der ersten Gruppe diskreter Zustandsraum-Gleichungen für die zweite Mehrzahl von Motoren (10).

19. Verfahren nach Anspruch 18, bei dem der Messschritt ferner die folgenden Schritte umfasst:

Messen der Spannung, des Stroms und der Drehzahl jedes der mehreren Motoren (10) mit mehreren Sensoren;

Multiplizieren der gemessenen Spannung (V), des gemessenen Stroms (i) und der gemessenen Drehzahl (w) jedes der mehreren Motoren (10) mit ausgewählten Invarianten in Übereinstimmung mit den folgenden Motorinvarianten-Gleichungen:

$$L\ di/dt + Ri = V + k1\ wi$$

$$J\ dw/dt + fw = k2\ i2 + M$$

um Motorinvarianten für die Induktivität (L), den ohmschen Widerstand (R), das Trägheitsmoment (J) und den Reibkoeffizienten (f) jedes der mehreren Motoren (10) zu erhalten, wobei k1 und k2 Motorkonstanten sind und M die Last jedes der mehreren Motoren (10) darstellen.

20. Verfahren nach Anspruch 19, wobei das Verfahren die folgenden Schritte umfasst:

Vergleichen der Lösung der Gruppe von Motorinvarianten-Gleichungen für jeden der mehreren Motoren (10) mit der Lösung der Gruppe von Motorinvarianten-Gleichungen für die mehreren Motoren (10), um einen fehlerhaften Motor (10) zu identifizieren;

Entfernen des fehlerhaften Motors (10) aus den mehreren Motoren (10), um eine zweite Mehrzahl von Motoren (10) zu bilden; und

erneutes Berechnen der Motorinvarianten-Gleichungen für die zweite Mehrzahl von Motoren (10).

21. Verfahren nach Anspruch 20, das ferner den Schritt umfasst, bei dem festgestellt wird, ob jeder der mehreren Motoren (10) fehlerhaft ist.

22. Verfahren nach Anspruch 21, das ferner den Schritt umfasst, bei dem in Reaktion auf den Feststellungsschritt der jedem der mehreren Motoren (10) zugeordnete Fehler klassifiziert wird.

23. Verfahren nach Anspruch 18, bei dem der Verwendungsschritt ferner den Schritt des Auswählens einer Schwellenwertgrenze auf der Grundlage zweier Standardabweichungen um den Mittelwert der kombinierten Mehrzahl von Betriebssignalen umfasst.

24. Verfahren nach Anspruch 17, das ferner die folgenden Schritte umfasst:

Erzeugen eines Diagnosemodells aus den mehreren Motoren (10), wobei das Diagnosemodell physikalische Parameter und eine jedem physikalischen Parameter zugeordnete Standardabweichung enthält, wobei das Diagnosemodell eine Schwellenwertgrenze besitzt, die jedem der physikalischen Parameter zugeordnet ist;

Messen ausgewählter physikalischer Parameter jedes der mehreren Motoren (10);

für jeden Motor (10) Vergleichen jedes der ausgewählten physikalischen Parameter mit dem Diagnosemodell; und

**EP 0 909 380 B1**

für jeden Motor (10) Identifizieren wenigstens eines Fehlers, falls wenigstens einer der ausgewählten physikalischen Parameter die entsprechende Schwellenwertgrenze des physikalischen Parameters in dem Diagnosemodell übersteigt.

**25.** Verfahren nach Anspruch 24, das ferner das Anzeigen der Ergebnisse des Identifizierungsschrittes umfasst.

**26.** Verfahren nach Anspruch 24, bei dem der Identifizierungsschritt ferner die folgenden Schritte umfasst:

Angeben eines im Ungleichgewicht befindlichen Rotors (10) in Reaktion auf eine Änderung des (L di/dt)-Terms in der ersten Gleichung;
Angeben eines Fehlers des Kollektors (22) in Reaktion auf eine Änderung des Ri-Terms in der ersten Gleichung;
Angeben eines Fehlers des Lagers (18) in Reaktion auf eine Oszillationsänderung des (L di/dt)-Terms in der ersten Gleichung; und
Angeben eines Fehlers des Lagers (18) in Reaktion auf eine Änderung sowohl des (L di/dt)-Terms als auch des fw-Terms in der ersten und der zweiten Gleichung.

**Revendications**

**1.** Système de contrôle d'état d'un moteur (30) pour surveiller la condition de fonctionnement d'un moteur (10), comprenant une pluralité de capteurs (34, 35 et 36) pour mesurer une pluralité de signaux de fonctionnement dudit moteur (10) et un moyen d'ordinateur (42) apte à être couplé audit moteur (10) au moyen des capteurs (34, 35 et 36), **caractérisé en ce que** le moyen d'ordinateur (42) comprend un modèle dudit moteur, et des moyens pour appliquer ladite pluralité mesurée de signaux de fonctionnement pour résoudre une équation d'état linéaire temporelle discrète ; des moyens pour calculer un reliquat pour comparer la solution de ladite équation d'état à la solution suggérée par ledit modèle ; des moyens pour déterminer, sur la base dudit calcul et de ladite comparaison, si ledit moteur fonctionne sans défaut détecté ; des moyens pour corréler ledit reliquat à un défaut dans le cas où ledit moteur (10) fonctionne avec un défaut détecté et communiquer l'existence dudit défaut pour empêcher une défaillance non anticipée du moteur (10) ; et des moyens pour répéter lesdites étapes à des intervalles de temps sélectionnés pendant le fonctionnement dudit moteur (10).

**2.** Système de contrôle d'état d'un moteur (30) selon la revendication 1, comprenant des moyens pour calculer un modèle de signal de tension de sortie sur la base de la tension d'entrée et du courant réels appliqués au moteur.

**3.** Système de contrôle d'état d'un moteur (30) selon la revendication 1, comprenant en outre un moyen pour classifier les défauts mécaniques dudit moteur électrique en comparant les valeurs courantes desdits paramètres de fonctionnement à des valeurs de référence desdits paramètres de fonctionnement.

**4.** Système de contrôle d'état d'un moteur (30) selon la revendication 1, **caractérisé en ce que** la pluralité de capteurs (34, 35 et 36) sont des capteurs analogiques.

**5.** Système de contrôle d'état d'un moteur (30) selon la revendication 1, **caractérisé en ce que** la pluralité de capteurs (34, 35 et 36) sont un capteur de tension (34), un capteur de courant (35) et un capteur tachymètre (36), respectivement.

**6.** Système de contrôle d'état d'un moteur (30) selon l'une quelconque des revendications précédentes, comprenant en outre une carte multifonction (37) pour recevoir les sorties de la pluralité de capteurs (34, 35 et 36) et convertir le signal analogique en un signal numérique et transmettre le signal transformé à l'ordinateur (42).

**7.** Système de contrôle d'état d'un moteur (30) selon l'une quelconque des revendications précédentes, **caractérisé en ce que** ledit moteur (10) est un moteur électrique de puissance fractionnaire.

**8.** Procédé pour surveiller le fonctionnement d'un moteur électrique (10) pour détecter des défauts capables de provoquer une défaillance dudit moteur (10), comprenant les étapes consistant à :

prévoir un modèle dudit moteur (10) sur un ordinateur (42) ;
coupler ledit moteur (10) audit ordinateur (42) au moyen d'une pluralité de capteurs (34, 35 et 36) ;

**19**

mesurer une pluralité de signaux de fonctionnement dudit moteur (10) au moyen desdits capteurs (34, 35 et 36) ;

appliquer ladite pluralité mesurée de signaux de fonctionnement pour résoudre une équation d'état linéaire temporelle discrète ;

calculer un reliquat pour comparer la solution de ladite équation d'état à la solution suggérée par ledit modèle ;

déterminer, sur la base de ladite étape de calcul et de comparaison, si ledit moteur (10) fonctionne sans défaut détecté ;

corréler ledit reliquat à un défaut dans le cas où ledit moteur (10) fonctionne avec un défaut détecté et communiquer l'existence dudit défaut pour empêcher une défaillance non anticipée du moteur (10) ; et

répéter lesdites étapes, autres que ladite étape de prévision d'un modèle, à des intervalles de temps sélectionnés pendant le fonctionnement dudit moteur (10).

9.  Procédé selon la revendication 8, dans lequel ladite étape de développement d'un modèle comprend les étapes consistant à :

mesurer la tension, le courant et la vitesse dudit moteur électrique (10) ;

multiplier la tension (V), le courant (i) et la vitesse (w) mesurés dudit moteur électrique (10) par des invariants pour obtenir une représentation du système sans défaut ;

calculer et retenir le résultat des équations d'ensemble d'état discrètes :

$$x(k+1) = A\ x(k) + B\ u(k)$$

$$y(k) = C\ x(k)$$

où x, u et y sont le vecteur d'état, le vecteur d'entrée et le vecteur de sortie, respectivement, et k indique des incréments de temps discrets et où A, B et C sont des matrices nominales connues dudit moteur électrique (10) ;

répéter les étapes de mesure et de multiplication ;

calculer le résultat des équations d'ensemble d'état discrètes pour les valeurs réelles :

$$xf(k+1) = Af\ xf(k) + Bf\ uf(k)$$

$$yf(k) = Cf\ x(k)$$

comparer les différences entre y(k) et yf(k); et

répéter ladite séquence d'étapes de répétition, calcul et comparaison jusqu'à ce que la différence dépasse un seuil sélectionné.

10.  Procédé selon la revendication 9, dans lequel ladite étape de mesure d'une pluralité de signaux de fonctionnement comprend la mesure de la sortie de courant (i) dudit moteur (10), de la tension (V) appliquée au moteur (10) et de la vitesse (w) du moteur (10) pendant un intervalle sélectionné.

11.  Procédé selon la revendication 9, dans lequel ladite étape de développement du modèle dudit moteur (10) comprend l'obtention d'invariants du moteur pour l'inductance (L), la résistance (R), le moment d'inertie (J) et le coefficient de friction (f) dudit moteur (10), et la combinaison desdits invariants avec les signaux mesurés conformément aux équations qui suivent :

$$L\ di/dt + Ri = V + k1\ w\ i$$

et

$$J\ dw/dt + fw = k2\ i2 + M$$

où k1 et k2 sont des constantes du moteur et M représente la charge du moteur.

12. Procédé selon la revendication 11, dans lequel ladite étape de corrélation et de communication comprend en outre les étapes consistant à :

indiquer un rotor déséquilibré (12) en réponse au changement dudit paramètre de fonctionnement L di/dt;
indiquer un défaut de collecteur (22) en réponse au changement dudit paramètre Ri ;
indiquer un défaut de palier (18) en réponse à une variation d'oscillation dudit paramètre L di/dt; et
indiquer un défaut de palier (18) en réponse au changement à la fois dudit paramètre L di/dt et dudit paramètre fw.

13. Procédé selon la revendication 9, dans lequel ledit intervalle est compris entre 400 millisecondes et 1000 millisecondes.

14. Procédé selon la revendication 10, dans lequel lesdits paramètres de fonctionnement sont échantillonnés à une fréquence d'échantillonnage comprise entre 500 Hz et 24 kHz.

15. Procédé selon la revendication 8, comprenant en outre, lorsque ladite séquence d'étapes a pour résultat une différence qui dépasse ledit seuil sélectionné, les étapes consistant à :

sélectionner une valeur de seuil de paramètre pour l'inductance (L di/dt), la résistance du moteur (Ri), l'inertie du moteur (J dw/dt) et les constantes du moteur (fw, k1wi et i2k2) ; et comparer chaque produit L di/dt, Ri, J dw/dt, fw, k1wi et i2k2 avec l'une correspondante desdites valeurs de seuil sélectionnées.

16. Procédé selon la revendication 15, comprenant en outre l'étape consistant à afficher les résultats desdites étapes de comparaison.

17. Procédé de détection de défaut et de diagnostic basé sur modèle pour détecter les défauts dans une pluralité de moteurs (10) d'un type de moteur commun et développer une information de diagnostic pour la correction desdits défauts, ledit procédé comprenant les étapes consistant à :

générer une représentation d'état modélisée de ladite pluralité de moteurs (10), ladite représentation d'état modélisée comprenant une limite de seuil dérivée de ladite pluralité de moteurs (10) ;
mesurer les paramètres de fonctionnement de chacun desdits moteurs (10) dans ladite pluralité de moteurs (10) pour développer une représentation d'état modélisée de chacun desdits moteurs (10) ;
comparer ladite représentation d'état modélisée de ladite pluralité de moteurs (10) avec ladite représentation d'état modélisée de chacun desdits moteurs (10) dans ladite pluralité de moteurs (10) ;
déterminer si chacun desdits moteurs (10) est un moteur défectueux (10) ;
enlever de ladite pluralité de moteurs (10), en réponse à ladite étape de détermination, ledit moteur défectueux (10) ;
changer ladite limite de seuil de ladite représentation d'état modélisée de ladite pluralité de moteurs (10) en réponse à la détection dudit moteur défectueux (10) ; et
répéter lesdites étapes de comparaison, détermination, enlèvement et changement pour chacun desdits moteurs (10) dans ladite pluralité de moteurs (10).

18. Procédé selon la revendication 17, dans lequel ledit procédé comprend les étapes consistant à :

sélectionner une pluralité de moteurs (10) comprenant des moteurs (10) fonctionnant sans défaut et des moteurs (10) fonctionnant avec un ou plusieurs défauts inconnus ;
mesurer une pluralité de signaux de fonctionnement pour chaque moteur (10) dans ladite pluralité de moteurs (10) ;
utiliser ladite pluralité de signaux de fonctionnement, résoudre un ensemble d'équations d'ensemble d'état discrètes pour ladite pluralité de moteurs (10), où ledit ensemble d'équations d'ensemble d'état discrètes se présente sous la forme suivante :

$$x(k+1) = Ax(k) + Bu(k)$$

$$y(k) = Cx(k)$$

où x, u et y sont un vecteur d'état, un vecteur d'entrée et un vecteur de sortie, respectivement, k indique des incréments de temps discrets et A, B et C sont des matrices nominales connues de ladite pluralité de moteurs (10) ;

comparer la solution dudit ensemble d'équations d'ensemble d'état discrètes pour chaque moteur (10) dans ladite pluralité de moteurs (10) à la solution dudit ensemble d'équations d'ensemble d'état discrètes pour ladite pluralité de moteurs (10) pour identifier un moteur défectueux (10) ;

enlever ledit moteur défectueux (10) de ladite pluralité de moteurs (10) pour former une seconde pluralité de moteurs (10) ; et

recalculer ledit premier ensemble d'équations d'ensemble d'état discrètes pour ladite seconde pluralité de moteurs (10).

19. Procédé selon la revendication 18, dans lequel ladite étape de mesure comprend en outre les étapes consistant à :

mesurer la tension, le courant et la vitesse de chaque moteur de ladite pluralité de moteurs (10) au moyen d'une pluralité de capteurs ;

multiplier la tension (V), le courant (i) et la vitesse (w) mesurés de chaque moteur de ladite pluralité de moteurs (10) avec des invariants sélectionnés conformément aux équations d'invariants de moteur qui suivent :

$$L\, di/dt + Ri = V + k1wi$$

$$J\, dw/dt + fw = k2i2 + M$$

pour obtenir les invariants du moteur pour l'inductance (L), la résistance (R), le moment d'inertie (J) et le coefficient de friction (f) de chaque moteur de ladite pluralité de moteurs (10) où k1 et k2 sont des constantes du moteur et M représente la charge sur chaque moteur (10) de ladite pluralité de moteurs (10).

20. Procédé selon la revendication 19, dans lequel ledit procédé comprend les étapes consistant à :

comparer la solution dudit ensemble d'équations d'invariants de moteur pour chaque moteur (10) dans ladite pluralité de moteurs (10) avec la solution dudit ensemble d'équations d'invariants de moteur pour ladite pluralité de moteurs (10) pour identifier un moteur défectueux (10) ;

enlever ledit moteur défectueux (10) de ladite pluralité de moteurs (10) pour former une seconde pluralité de moteurs (10) ; et

recalculer lesdites équations d'invariants de moteur pour ladite seconde pluralité de moteurs (10).

21. Procédé selon la revendication 20, comprenant en outre l'étape consistant à déterminer si chaque moteur (10) de ladite pluralité de moteurs (10) est défectueux.

22. Procédé selon la revendication 21, comprenant en outre l'étape, en réponse à ladite étape de détermination, consistant à classifier le défaut associé audit chaque moteur (10) de ladite pluralité de moteurs (10).

23. Procédé selon la revendication 18, dans lequel ladite étape d'utilisation comprend en outre l'étape consistant à sélectionner une limite de seuil sur la base de deux écarts types autour de la moyenne de la pluralité combinée de signaux de fonctionnement.

24. Procédé selon la revendication 17, comprenant en outre les étapes consistant à :

générer un modèle de diagnostic à partir de ladite pluralité de moteurs (10), ledit modèle de diagnostic comprenant des paramètres physiques et un écart type associé à chaque paramètre physique, ledit modèle de diagnostic ayant une limite de seuil associée à chacun desdits paramètres physiques ;

mesurer les paramètres physiques sélectionnés de chaque moteur (10) dans ladite pluralité de moteurs (10) ;

pour chaque moteur (10), comparer chacun desdits paramètres physiques sélectionnés audit modèle de diagnostic ; et

pour chaque moteur (10), identifier au moins un défaut, si au moins un desdits paramètres physiques sélectionnés dépasse ladite limite de seuil du paramètre physique correspondante dans ledit modèle de diagnostic.

**25.** Procédé selon la revendication 24, comprenant en outre l'affichage des résultats de ladite étape d'identification.

**26.** Procédé selon la revendication 24, dans lequel ladite étape d'identification comprend en outre les étapes consistant à :

indiquer un rotor déséquilibré (12) en réponse à un changement dudit terme L di/dt dans ladite première équation ;
indiquer un défaut de collecteur (22) en réponse à un changement dudit terme Ri dans ladite première équation ;
indiquer un défaut de palier (18) en réponse à une variation d'oscillation dudit terme L di/dt dans ladite première équation ; et
indiquer un défaut de palier (18) en réponse à un changement à la fois dudit terme L di/dt et dudit terme fw dans lesdites première et seconde équations.

FIGURE 1

FIGURE 2

FIGURE 3

FIGURE 4

30

42

32

10

34

35

36

37

FIGURE 5

10

MOTOR

Input

MODEL

44

Measured Output

Model Output

+

46

Deviation

50    Fault Free Motor

No

Fault
Detected?

48

Yes

52    Analysis of
Faulty Parameters

54    Fault Classification

FIGURE 6

START MCM

Load the Fault Detection Observer — 62

Display Graphical User Interface — 64

Has <Monitor> Button Clicked On — 66
No
Yes

Aquire Data — 68

Evaluate the Residual Using the Fault Detection Observer — 70

Is Residual Within the Threshold Value — 72

Display <No Fault Detected> — 74

Display <Warning!! Check Motor!! Possible Impending Mechanical Failure!!> — 76

End Program

A

FIGURE 7A

27

FIGURE 7B

START

D

Is Base Motor
Model File
Available ? —90

Load Base Motor Model —120

Enter Tolerance Multiplier
For Fault Detection —122

Enter Tolerance Multiplier
Fault Classification —124

Calculate Fault
Detection Threshold —126

Calculate Fault Classification
Threshold Values for Fault
Parameters —128

A

FIGURE 8A

$\text{A}$

Enter Scan Time — 130

Enter Scan Rate — 132

Start Data Acquisition For Current, Voltage and Speed Measurements — 134

Store Measured Current, Voltage and Speed Data — 136

Read Stored Data — 138

Preprocess Data For Noise Reduction — 140

Get Base Motor Model — 142

$\text{B}$

FIGURE 8B

Determine Model Estimates of
Current and Speed Signals ⟋—144

Calculate Residuals Using
Estimated and Measured Current
and Speed Signals ⟋—146

Are
Deviations of
Residuals > Fault Detection
Thresholds ? ⟋—148

No → Display Motor Status
As "Fault Free" ⟋—150

Display Motor As "Faulty" ⟋═152

Evaluate Fault Parameters Using
Measured Current, Voltage and
Speed Signals ⟋—154

B

C

FIGURE 8C

C

Is
Fault Parameter # 1
≤ Threshold Value? —156

Yes → Display "Check Fault # 1 —164

No

158 —

Is
Fault Parameter # 2
≤ Threshold Value ?

Yes → Display "Check Fault #.2 —166

No

160 —

Is
Fault Parameter # N
≤ Threshold Value?

Yes → Display "Check Fault # N" —168

No

162 —

All
Fault Parameters
≤ Threshold Value?

Yes → Display "Unclassified Fault" —170

No

Go To "A"

FIGURE 8D

D

Develop Base Motor
Model — 92

Enter Tolerance Multiplier
For Base Motor Model — 94

Load Test Data for a Group
Of Motors — 96

Combine Data as if Obtained
From a Single Motor — 98

Use Modeling Program to
Obtain Model of a Motor
Representing the Group — 100

Evaluate Modeling Errors,
the Mean Values and the
Standard Deviations — 102

Evaluate Threshold Values
For Modeling Errors — 104

F

E

FIGURE 8E

33

Ⓕ

Ⓔ

Update Data File ⌐112

Using Group Motor Model ,
Evaluate Modeling Errors
Individual Motors ⌐106

Exclude Faulty Data
Files from Group
⌐110

No

Are
All the Modeling
Errors within Threshold
Values? ⌐108

Evaluate Physical Paramters
Of the Theoretical Model
and Standard Deviation ⌐114

Store Model of the Group, the
Physical Parameters and the
Standard Deviations as the Base
Motor Model File ⌐116

FIGURE 8F

34